# EUROPEAN PATENT SPECIFICATION

(11) **EP 1 668 525 B1**
(45) Date of publication and mention of the grant of the patent: **21.01.2009**
(21) Application number: 04775146.6
(22) Date of filing: 16.09.2004
(51) Int. Cl.: G06F 13/38, H04L 12/24, G06F 13/12

(54) **DATA TRANSFER MANAGEMENT METHOD, SOFTWARE AND SYSTEM**
DATENTRANSFER-VERWALTUNGSVERFAHREN, SOFTWARE UND SYSTEM
PROCEDE, LOGICIEL ET SYSTEME DE GESTION DE TRANSFERTS DE DONNEES

(30) Priority: 18.09.2003 NZ 52832503
(43) Date of publication of application: 14.06.2006
(73) Proprietor: Endace Technology Limited, Hamilton, 2001 (NZ)
(72) Inventor: PELLET, Selwyn Lyall, Brookby, Auckland, 1702 (NZ)
(74) Representative: Johnson, Terence Leslie
(86) International application number: PCT/NZ2004/000221
(87) International publication number: WO 2005/026972

(56) References cited:
- GB-A- 2 371 641
- US-A- 5 909 546
- US-A- 6 134 607
- US-A1- 2002 099 857
- US-B1- 6 292 831
- US-B1- 6 529 945

## Description

### TECHNICAL FIELD

The present invention relates to a data transfer management method, software and system. Preferably the present invention may be used in information technology and computing fields to manage the transfer of data between a base component interfaced with an extension component. Furthermore, reference throughout this specification will also be made to the present invention being used to control the volume of traffic transferred between these components. However, those skilled in the art should appreciate that other configurations of the present invention are also envisioned.

### BACKGROUND ART

Standard computer systems and computer architectures aim to provide a general or generic system with one or more central processing units (CPU's). General purpose circuits and computer chips are normally provided in conjunction with one or more CPU's on a mother board formed from a printed circuit board. With such generic architectures, a wide variety of tasks and functions may be provided through software routines executed by the CPU or CPU's.

However, in some instances it is preferable to increase or improve the performance of a computer system through the provision of additional customised hardware or circuitry. Expansion cards including additional computer chips, circuits and potentially further processors may be mounted on additional circuit boards and interfaced with a mother board and its associated processor (s) by some form of communications resource. The customised components on an expansion card can then be harnessed by the processor to perform a new set of functions, or existing functions with better performance.

US Patent No5.909.546 to Osborne entitled "Network Interface Having Support For Allowing Remote Operations with Reply that Bypass Host Computer Interaction", for example, discloses a network interface having support for remote operations with reply that bypass host computer interaction.

The communications resource employed to interface an expansion card to the mother board can be selected from a wide number and variety of different technologies. The most common form of interface is a peripheral component interconnector bus, or PCl bus. These types of multi-access bus systems allow a number of peripheral expansion card systems to communicate data with a mother board processor on demand.

Alternatively, in other instances a dedicated communications link may be provided directly between a processor and an expansion card if required.

These communications resources, and in particular the PCI bus, have a fixed capacity or bandwidth. This can cause problems if a significant amount of data is to be transferred between a processor and expansion card over a relatively short period of time. Data potentially could become lost or corrupted in such instances, degrading the performance of the computer system involved. In the case of multi-access bus systems such as the PCI bus, this limitation is further compounded by the addition of multiple expansion cards accessing a single bus, all of which will contribute to traffic to be transferred over the bus system.

This limitation can cause problems in any number of different applications where data needs to be transferred at high rates and volumes. For example, computer network monitoring and filtering systems can be implemented through the provision of such expansion card hardware added to a standard computer systems architecture. Such systems can be configured to inspect all traffic passing through a node of a computer network where inspected traffic is subsequently filtered and can be retransmitted by the system provided. In this application, all the data traversing the network node must be transferred to the processor and then back from the processor over the communications resource employed to interface processor with an expansion card. This volume of traffic can potentially swamp the communication resource and result in traffic being dropped or lost from the network.

Those skilled in the art should also appreciate that traditional caching techniques are of little use in such applications. Data caches are generally used to accelerate multiple reads operations from a popular or important data set held locally. However, in such applications as discussed above, the data set involved is continuously changing, thereby defeating the purpose of having a local and relatively static cache of data. Furthermore, traditional caches are normally controlled by a computer system's CPU which can be a relatively slow operation when all other tasks to be completed by this CPU are also taken into account.

Traditional caches are also normally smaller than the main memory employed by a CPU, and are used to hold a subset of the most important data required by the CPU. Such small caches cannot be used in the application discussed above as a complete large record of data involved must be maintained, not a subset of the most popular or important data received.

An improved data transfer management system which addressed any or all of the above problems would be of advantage. In particular, a data transfer management system which could be used in conjunction with a limited capacity or bandwidth communications resource which interfaced a base computer system and expansion components to improve the performance of same would be of advantage.

No admission is made that any reference constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in rotation to one or more steps in a method or process.

It is an object of the present invention to address the foregoing problems or at least to provide the public with a useful choice.

Further aspects and advantages of the present invention will become apparent from the ensuing description which is given by way of example only.

### DISCLOSURE OF INVENTION

The present application provides a method of managing data transfers according to claim 1, data transfer management software according to claims 18 and 22, an extension component according to claim 20, and a data transfer management system according to claim 23.

The present invention is adapted to provide a data transfer management system, method and also software adapted to facilitate same- Those skilled in the art should appreciate that a combination of existing components or hardware may be collected or associated together to provide such a system, which also incorporates software employed to execute the management method discussed below. Furthermore, customised software may be provided to manage the operation of specific components of the hardware employed, as should be appreciated by those skilled in the art.

Reference throughout this specification will also be made in general to the present invention being implemented as a data traffic management system. However, those skilled in the art should appreciate that software routines to be run in conjunction with both the base component and also extension component can form a significant contribution to the present invention. Software may be written for and run in conjunction with an extension component to communicate with corresponding software written for and run by a base component to achieve the method of data transferred management substantially as described below.

Preferably, the present invention is adapted to manage data transfers between a base component and an extension component. The base component may include one or more processors, preferably in the form of micro-processors or standard computer system central processing units (CPU's). An extension component as discussed throughout this specification may be defined as any collection of hardware components which can be interfaced with a base component or base computer system to extend the functionality or improve the performance of the base computer system. For example, standard computer architecture expansion cards or boards may be provided as extension components in conjunction with the present invention.

Reference throughout this specification will also be made to a base component being formed by a base computer system with a single mother board incorporating a single CPU. However, those skilled in the art should appreciate that a number of various architectures of base components forming a base computer system may be employed in conjunction with the present invention, and reference to the above throughout this specification should in no way be seen as limiting.

Furthermore, reference throughout this specification will also be made to an extension component being formed from a standard expansion slot card. However, again those skilled in the art should appreciate that various other forms of hardware architectures or implementations of extension components may be employed in conjunction with the present invention and reference to the above only throughout this specification should in no way be seen as limiting. Those skilled in the art should appreciate that an extension component may be formed from any additional hardware components which are to be interfaced with a base component and which also can readily be added or removed to such a base component on demand.

Preferably an extension card when used in conjunction with the present invention is adapted to receive data. This received data may preferably be further processed by the processor provided in the base computer system.

Furthermore those skilled in the art should also appreciate that the term received employed throughout this specification should also be taken to encompass the generation of data by an extension component if required. Data may then be received by an extension component from a source process that it executes, or alternatively may come from a source external to the extension component.

In a further preferred embodiment an extension card may be adapted to receive data from a digital transmission network, such as for example, a computer based network. In such an application the extension card may be interfaced with the base computer system, and in turn interfaced to a digital transmission network. The present invention may be used in network monitoring, filtering or security applications to manage traffic transmitted through a particular node of a transmission network.

In such preferred applications the data to be transferred and managed in conjunction with the present invention may be formatted as packets of data which include header sections and data payload sections. Preferably such data packets may be processed further by a processor provided in the base computer system.

Reference throughout this specification will also be made to the present invention being employed in a digital transmission network monitoring or management role. However, those skilled in the art should appreciate that many other alterative applications are also envisioned in which the present invention may be employed and reference to the above only throughout this specification should in no way be seen as limiting.

In a preferred embodiment an extension card may also include an extension component data store. An extension component data store may be employed to store data received from a computer network by the extension card. Preferably this data may be buffered or stored for a limited period of time and may also be overwritten by newer incoming data as time progresses.

In a further preferred embodiment an extension component data store may have its memory addresses arranged in the form of a circular buffer. This arrangement may employ a circular memory location addressing scheme to continuously write data to and read data from the extension data store. This circular buffer uses or provides a continuous array of addresses. This type of data storage structure can in practice sink or store incoming data and then subsequently provide the same data after a delay period. The memory locations or positions at which data is stored may be addressed to read or write data from the store, preferably in a sequenced or controlled manner to preserve the order in which data is received from the network interfaced with the extension card.

In a further preferred embodiment an extension component data store may be used to store all data received from a digital transmission network by the extension card.

In a further preferred embodiment a single extension component data store may be provided for each extension card. Reference throughout this specification will also be made to an extension card including a single extension component data store only. However, those skilled in the art should appreciate that two or more data stores may also be provided in conjunction with an extension card if required.

Preferably an extension card provided in the accordance with the present invention may be adapted, programmed or formed so as to store data within an extension component data store and also transfer this data to a processor integrated within a base component using a communications channel. Furthermore, the extension component provided can also be adapted, formed or programmed to receive references to the data stored in its extension component data store from the base component using the communications channel involved. Once references to data stored have been received this data may then be retrieved by the extension component from its own data store.

Those skilled in the art should appreciate that these operations or functions of the extension card maybe implemented in a number of different ways. For example, software forming computer executable instructions maybe loaded into a mirco-processor integrated into the extension card. Alternatively, a programmable logic controller (PLC) may be loaded with logic gate instructions to effect such processing. In another alternative embodiment such instructions may be hard coded into actual logic gate components allowing the process discussed above as software to be implemented through a hardware configuration.

Reference may also be made throughout this specification to the specific operational steps executed by an extension card been implemented through software or computer readable instructions to be loaded onto a programmable logic device. However those skilled in the art should appreciate any number of arrangement of logic devices, such as for example an array of logic gates, hard coded with such instructions may also be employed if required.

Preferably the base component or base computer system may include a single processor as discussed above. This processor may be integrated within a mother board provided in the base computer system and may be employed to process data transferred in conjunction with the present invention. A relatively high speed or high performance processor can be employed for a variety of tasks including but not limited to the processing of data transferred in conjunction with the present invention.

In a preferred embodiment the present invention also includes a communications channel which links a base computer system and associated processor with the extension component or extension card.

In a further preferred embodiment the communications channel may be formed from a multi-access bus system, such as for example, a PCI bus. Bus systems in general (and in particular PCI buses) are well known in the art and commonly used with standard computer system architectures to interface extension components or cards with a mother board.

Reference throughout this specification will also be made to the communication channel employed being a PCI bus. However, those skilled in the art should appreciate that other types of communication channels and communications infrastructure may be employed in conjunction with the present invention if required. For example, PCl-X, PCI-express or any other number of other different forms of communication resources, infrastructures or protocols may all be employed in conjunction with the present invention if required.

In a preferred embodiment the processor may receive data from an extension card via the PCI bus. The processor may in turn execute one or more processing algorithms in relation to such data depending on the specific application within which the present invention is to be used.

In a preferred embodiment all data received by an extension component may be transferred to the base component using the communications channel.

In a further preferred embodiment the processor may be adapted to facilitate a traffic filtering role when the extension card employed is used to monitor computer network traffic. The processor may execute algorithms or processes which check the characteristics of specific data packets, and potentially may remove these packets from the network, retransmit these packets unchanged or alternatively modify the packet, or add new packets to the network in response to a received packet. For example, in such instances, the base system involved may be configured to both forward and also respond to received packets or data from a network. The base system may act as an end point to communications if a packet with the right characteristics are received or alternatively may simply forward on or drop and filter packets if other characteristics are present.

Those skilled in the art should appreciate that such network monitoring, management or filtering applications are known in the art and therefore need not be discussed in detail throughout this specification.

In a preferred embodiment the base computer system may also include a processor data store. Such a data store may be formed from or composed of all or a portion of the main memory or RAM available to a CPU of the computer system. This processor data store may be adapted to receive and store for a required period of time all data received from an extension card. The processor data store may be accessed by the processor to implement the processing algorithms required.

In a further preferred embodiment the base computer system may include or define a number of processor data stores equal to the number of extension components or extension cards connected to the communications channel. A corresponding pair of processor data store and extension component data stores may be maintained for each and every extension card interfaced with the base computer system.

In a preferred embodiment a copy of the same data may be held by the processor data store and the extension component data store.

Reference throughout this specification will also be made to a single extension card being interfaced with a base computer system and therefore the provision of a single processor data store and a single extension card data store. However, those skilled in the art should appreciate that other configurations of the present invention are also envisioned and reference to the above only throughout this specification should in no way be seen as limiting.

In a preferred embodiment data may be written to the processor data store directly by interface components employed to manage the PCI bus or other forms of communications channel. In this way the communications channel may write data directly into a processor data store. In such an embodiment, any packet transferred across the PCI bus may be directly written into the processor memory without the processor needing to take any action or issue any commands to complete such a write operation. In such instances, the processor memory may continuously receive data from the PCI bus and also have old received data overwritten by newer data as it comes to hand. In such instances, the processor data store may form a record of the most recently received packets from the PCI bus with the time duration or length of the record being dictated by the size of the memory space available to the processor data store.

In a further preferred embodiment the arrangement of memory location addresses available within the processor data store may be equivalent to the arrangement of memory location addresses available to the extension component data store. In such instances, the memory addressing scheme applied to the extension component data store may be equivalent to that applied to the processor store. This allows a reference to a memory location within the processor data store to point or reference to an equivalent memory location in extension component data store. In such instances a consistent or synchronised copy of the data involved may be stored in both the extension component data store and processor data store. This will allow a reference to data at a memory location within the processor data store to in turn be used as a reference to the same data within the extension component data store.

However in alternative embodiments the same equivalent memory addressing scheme may not be employed by both the processor data store and extension component data store. For example in some embodiments an alternative addressing scheme may be employed to implement the processor data store where the base component in question may calculate an appropriate reference to the location of a specific memory location of the extension component data store based on an equivalent memory address value within the processor data store. Such translation or offset calculations can be used to allow a processor data store to emulate the memory addressing scheme employed by to an extension component data store.

Reference throughout this specification will also be made to the same memory addressing scheme or architecture being employed in both the processor and extension component data stores. However, those skilled in the art should appreciate that alternative addressing schemes can be employed with a translation algorithm being executed by the processor to address specific memory locations within the extension component data store if required. Furthermore in other instances the need or requirement for a processor data store may be dispensed with if a processor can process in real time any incoming data received from the PCI bus and subsequently respond to same.

In a further preferred embodiment a circular buffer addressing scheme may be employed to implement both the extension component and processor data store. This circular buffer of memory addresses may wrap back onto itself to provide a continuous array of memory addresses which in turn can be continuously overwritten by incoming data either received by the extension card or received by the base computer system over the communications channel. Again however, those skilled in the art should appreciate that other forms of memory addressing schemes or configurations may also be employed in conjunction with the present invention and reference to the use of circular buffers only throughout this specification should in no way be seen as limiting.

In a preferred embodiment the processor may be adapted to transmit references to data it receives from an extension component back to the extension component after this data has been processed. Through the use of an equivalent or alternatively emulated memory addressing scheme between the processor and extension component data stores the processor can directly address the same data synchronised between the two data stores through the transmission of references over the communications channel back to the extension card. These references may consist of memory location addresses which identify the storage position or location of data of particular interest to the processor.

This implementation of the present invention may effectively or substantially reduce the amount of data traffic which needs to be carried by the communications channel between the base computer system and the extension component. Instead of the processor re-transmitting the same data back to the extension card, the processor may reference or address this data temporarily stored in the extension cards' data store as opposed to re-transmitting same. This approach can effectively half the traffic carried by the PCI bus in situations where, for example, the base computer system is used in network monitoring, filtering or security applications.

This configuration or implementation of the present invention may provide many potential advantages over the prior art.

The present invention may effectively be used as a packet or data quarantine system in networking applications. Incoming network traffic may be filtered or processed by a base computer system with this traffic being temporarily being held within the extension component data store prior to the base computer system authorising its release back onto the network. The size of the address space available within an extension component data store will in turn dictate how long a packet can be temporarily stored in such applications prior to being retransmitted, modified or dropped by algorithms executed by a base computer system processor.

In such applications the present invention also allows for the scaling of traffic filtering and analysis equipment beyond that which is normally achieved using standard computer system architecture. Furthermore, due to the improved or increased performance provided, data traffic interception or modification applications can be considered, as the processor may be adapted to modify or overwrite data packets or to insert new data packets onto the network in response to a received packet.

The present invention may also be used in applications outside of network monitoring or security where a traffic load applied to a communications resource between an extension component and base and computer system is to be alleviated. The use of references to data maintained in an extension component data store can substantially reduce the traffic applied to or across such a communications resource in a number of varying different applications for the present invention.

### BRIEF DESCRIPTION OF DRAWINGS

Further aspects of the present invention will become apparent from the following description which is given by way of example only and with reference to the accompanying drawings in which:
- Figure 1: shows a block schematic flow chart of steps executed by data transfer management software provided in accordance with a preferred embodiment of the present invention, and
- Figure 2: shows a block schematic diagram of physical components employed in both the extension component and base computer system discussed with respect to figure 1.

### BEST MODES FOR CARRYING OUT THE INVENTION

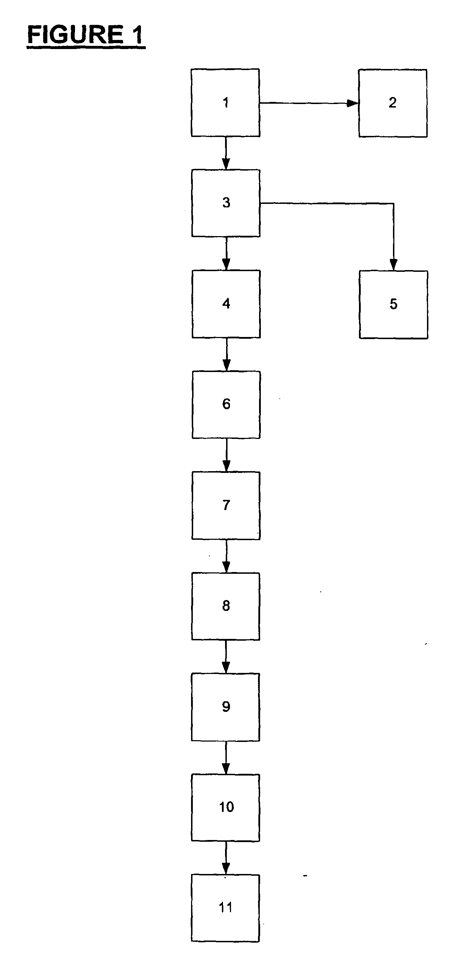

Figure 1 shows a block schematic flow chart of steps executed by data transfer management software provided in accordance with a preferred embodiment of the present invention.

In the embodiment shown, the first stage of the process executed is the receipt (1) of a data packet from a digital transmission network. In the embodiment discussed, an extension card employed to interface a base computer system with such a network is in turn interfaced with the base computer system via a PCl bus internal to the base computer system.

Next at stage 2 the received data packet is stored within a data store associated with the extension card. This data store is formed from a circular buffer data structure implemented through standard memory components mounted to the extension card.

At stage 3 of this method the received data packet is in turn transmitted over the PCI bus of a base computer system. At stage 4 the transmitted data packet is received by a CPU of the base computer system. Concurrently, the same received data packet is written at stage 5 into a processor data store integrated within the base computer system where the packet involved is written directly from a PCI bus controller. This storage step (5) allows all network traffic received at stage 1 to be directly written into the processor data store without the intervention or requirement for any action to be taken by the base computer system processor.

In the embodiment discussed the memory locations of the processor data store are organised in a circular buffer architecture, so that received data will be continuously written and overwritten into the memory locations of the processor data store. This allows a synchronised copy of the same data to be stored at both stage 2 (for the extension component data store) and stage 5 (for the processor data store).

Next at stage 6 of this process, the processor executes at least one processing algorithm which receives as an input the data packet received. Those skilled in the art should appreciate that many different types of algorithms or processes may be implemented by a standard CPU through software routines. In the embodiment discussed, the processor involved completes a packet filtering role to drop packets from a network which meet a certain filtering criteria.

Once stage 6 has been completed, stage 7 is implemented where the processor can calculate a reference to a memory location in the extension component data store at which a packet is stored which is to be retransmitted or placed back onto the network. Conversely if the algorithms executed with respect to stage 6 indicate that a packet should be dropped, the packet will in turn be ignored and no reference will be calculated. This reference calculation may be made through determining the address of the current data packet in the processor data store, as both data stores are synchronised and equivalent to one another.

At stage 8, the calculated data reference or address information is placed back onto the PCI bus, and at stage 9, received by a memory controller implemented within the extension card.

At next stage 10 the memory controller retrieves the data referenced, and at stage 11 this same retrieved referenced data is transmitted back onto the network involved.

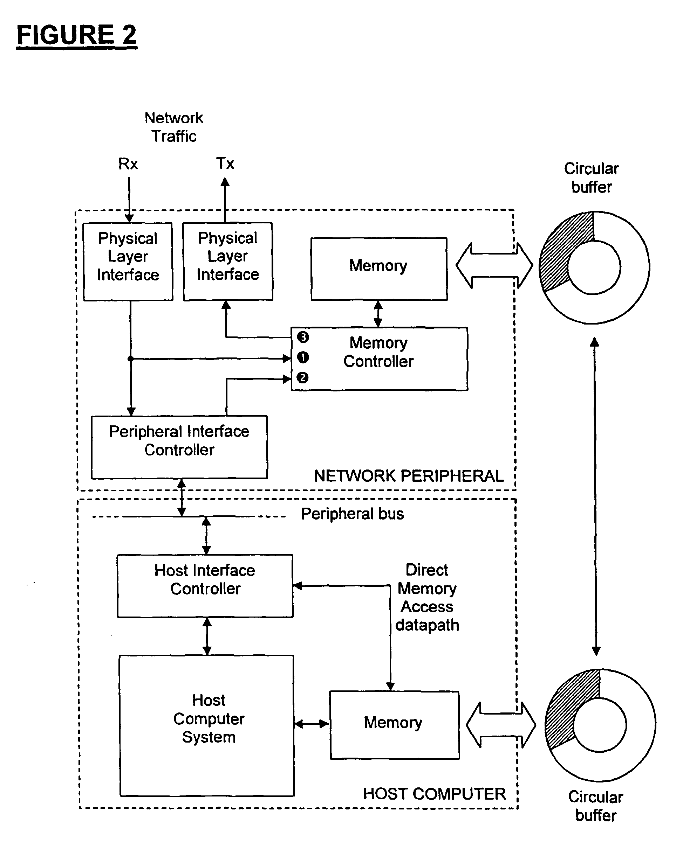

Figure 2 shows a block schematic diagram of hardware or physical components employed in both an extension component and base computer system discussed with respect to figure 1.

In the embodiment discussed, an extension component is formed from a network peripheral whereas a base component is formed from a host computer. These two components are interfaced together through a communications channel formed within the embodiment shown by a peripheral or PCI bus. The network peripheral is in turn interfaced with a computer network and able to receive and transmit network traffic symbolised by the text, Rx, Tx shown.

The network peripheral is adapted to receive data packets from the network via a physical layer interface and to subsequent forward these packets to input line (1) of the memory controller and to a peripheral interface controller. The memory controller in turn feeds a received packet through to the extension component data store memory integrated on board the network peripheral for storage within same. The data store or memory integrated into the network peripheral is organised or addressed in a circular buffer arrangement so that other packets received and written to memory will be continuously written and overwritten as time progresses.

The same packets are also forwarded to the peripheral interface controller which in turn places same on the peripheral bus for reception by a host interface controller integrated within the host computer. On receipt of a data packet the host interface controller forwards this packet to both the host computer system's CPU and also directly into a memory or data store associated with and accessible by the host CPU. Again, a circular buffer memory addressing scheme is employed in the host memory or processor data store provided so that data packets received across the bus are directly written into the circular buffer and overwritten with newer or more recently received packets as time progresses.

Preferably both these circular buffer data stores are synchronised with one another to store the same data packets at substantially the same memory addresses. This then allows a reference to a memory location within the host computer data store to also be used to reference the same data stored within the network peripheral memory or data store.

As discussed with respect to figure 1, the host computer system or CPU is adapted to receive data packets via the PCI bus but to retransmit references to data packets stored within the peripheral's circular buffer data store in response. This approach can effectively reduce the data traffic to be carried by the peripheral bus in a network filtering application. References can be received by the peripheral interface controller of the network peripheral and subsequently forward to import port (2) of the memory controller. The network peripheral memory controller can in turn retrieve the data packets referenced and subsequently output same via output port (3) through a physical layer transmission interface back onto the computer network involved.

Aspects of the present invention have been described by way of example only and it should be appreciated that modifications and additions may be made thereto without departing from the scope thereof.

## Claims

1. A method of managing data transfers between a base component and at least one extension component comprising the steps of storing (2) data received (1) by an extension component within an extension component data store, transferring (3) the data received by an extension component to a processor (4) integrated into a base component using a communications channel, and processing (6) the data transferred using the processor, **characterized by** transferring references (8) to the data stored in the extension component data store from the base component to the extension component (9) using the communications channel.

2. A method of managing data transfers as claimed in claim 1 wherein an extension component is formed from an expansion slot card.

3. A method of managing data transfers as claimed in either claim 1 or claim 2 wherein a base component includes one or more processors,

4. A method of managing data transfers as claimed in any previous claim wherein an extension component is adapted to receive (1) data from a digital transmission network.

5. A method of managing data transfers as claimed in claim 4 wherein the data received (1) by the extension component is formatted as packets of data.

6. A method of managing data transfers as claimed in any one of claims 4 or 5 wherein an extension component data store is used to store (2) all data received (1) from the digital transmission network by the extension card.

7. A method of managing data transfers as claimed in any previous claim wherein a communications channel is formed from a multi access bus system.

8. A method of managing data transfers as claimed in claim 7 wherein communications channel is formed by a PCI bus.

9. A method of managing data transfers as claimed in any previous claim wherein all data received (1) by an extension component is transferred (3) to the base component using the communications channel.

10. A method of managing data transfers as claimed in any previous claim wherein the base component includes a processor data store for each extension component connected to the communications channel.

11. A method of managing data transfers as claimed in claim 10 wherein data is written directly (5) into a processor data store by the communications channel.

12. A metho of managing data transfers as claimed in any one of claims 10 or 11 wherein the arrangement of memory addresses available within a processor data store is the same as the arrangement of memory addresses available to an extension component data store.

13. A method of managing data transfers as claimed in any one of claims 10 or 11 wherein the arrangement of memory addresses available within an extension component data store is emulated by a reference calculation completed by the base component using a processor data store address as an input to said calculation.

14. A method of managing data transfers as claimed in any previous claim wherein the arrangement of memory addresses of an extension component data store is in the form of a circular buffer.

15. A method of managing data transfers as claimed in claim 14 wherein the circular buffer provides a continuous array of addresses.

16. A method of managing data transfers as claimed in any one of claims 10 to 15 wherein a copy of the same data is held by the processor data store and extension component data store.

17. A method of managing data transfers as claimed in any previous claim wherein the base component is adapted to transmit references (8) to data it receives (4) from an extension component back to the extension component after processing (6) the data referenced.

18. Data transfer management software composed of computer executable instructions adapted to be run with an extension component, said software being adapted to execute the steps of storing (2) data received (1) by an extension component within an extension component data store, and transferring (3) the data received by the extension component to a processor (4) integrated within a base component using a communications channel, **characterized by** receiving references (9) to the data stored in the extension component data store from the processor using the communications channel.

19. Data transfer management software as claimed in claim 18, said software being further **characterised by** being adapted to execute the additional subsequent step of retrieving (10) the referenced data from the extension component data store.

20. An extension component to be used within a data transfer management system, said extension component being adapted to store (2) received data (1) within a data store, and transfer (3) the received data to a processor (4) integrated within a base component using a communications channel, **characterised in that** the extension component is adapted to receive references (9) to the stored data from the processor using the communications channel.

21. An extension component as claimed in claim 20, said extension component being adapted to retrieve (10) the referenced data from the extension component data store.

22. Data transfer management software composed of computer executable instructions adapted to be run with a base component, said software being adapted to execute the steps of receiving data received (1) by an extension component from the extension component using a communications channel, said data being previously stored (2) within an extension component data store associated with the extension component transferring said data, and processing (6) said received data using a processor of a base component, **characterised by** transferring references (8) to the data stored in the extension component (9) data store from the base component to the extension component using the communications channel.

23. A data transfer management system which comprises at least one extension component adapted to receive data (1), said at least one extension component being interfaced with a base component, and at least one extension data store adapted to store (2) data received (1) by said at least one extension component, and at least one processor integrated within a base component, said processor or processors being adapted to process (6) at least a portion of the data received by an extension component, and a communications channel adapted to transfer data between the base component and an extension component, wherein the base component is adapted to receive (4) data from an extension component using the communications channel, **characterised in that** the extension component is adapted to receive (9) from the base component references to data stored within the extension component data store using the communications channel.

24. A data transfer management system as claimed in claim 23 which comprises a processor data store integrated within the base component, said processor data store being adapted to store data received (4) by the base component from an extension component using the communications channel.

## Patentansprüche

1. Verfahren zur Verwaltung von Datenübertragungen zwischen einer Basiskomponente und mindestens einer Erweiterungskomponente, umfassend die Schritte der Speicherung (2) von Daten, die von einer Erweiterungskomponente empfangen (1) wurden, in einem Erweiterungskomponenten-Datenspeicher, Übertragen (3) der Daten, die von einer Erweiterungskomponente empfangen wurden, an einen Prozessor (4), der in einer Basiskomponente integriert ist, unter Verwendung eines Kommunikationskanals und Verarbeiten (6) der übertragenen Daten unter Verwendung des Prozessors, **gekennzeichnet durch** Übertragen von Verweisen (8) auf die Daten, die in dem Erweiterungskomponenten-Datenspeicher gespeichert sind, von der Basiskomponente an die Erweiterungskomponente (9) unter Verwendung des Kommunikationskanals.

2. Verfahren zur Verwaltung von Datenübertragungen nach Anspruch 1, wobei eine Erweiterungskomponente aus einer Erweiterungssteckplatz-Karte gebildet wird.

3. Verfahren zur Verwaltung von Datenübertragungen nach Anspruch 1 oder Anspruch 2, wobei eine Basiskomponente einen oder mehr Prozessoren enthält.

4. Verfahren zur Verwaltung von Datenübertragungen nach einem der vorstehenden Ansprüche, wobei eine Erweiterungskomponente angepasst ist, um Daten von einem digitalen Übertragungsnetz zu empfangen (1).

5. Verfahren zur Verwaltung von Datenübertragungen nach Anspruch 4, wobei die Daten, die von der Erweiterungskomponente empfangen (1) werden, als Datenpakete formatiert sind.

6. Verfahren zur Verwaltung von Datenübertragungen nach einem der Ansprüche 4 oder 5, wobei ein Erweiterungskomponenten-Datenspeicher verwendet wird, um alle Daten zu speichern (2), die durch die Erweiterungskarte von dem digitalen Übertragungsnetz empfangen (1) werden.

7. Verfahren zur Verwaltung von Datenübertragungen nach einem der vorstehenden Ansprüche, wobei ein Kommunikationskanal aus einem Mehrfachzugriffs-Bussystem gebildet wird.

8. Verfahren zur Verwaltung von Datenübertragungen nach Anspruch 7, wobei der Kommunikationskanal durch einen PCI-Bus gebildet wird.

9. Verfahren zur Verwaltung von Datenübertragungen nach einem der vorstehenden Ansprüche, wobei alle Daten, die von einer Erweiterungskomponente empfangen (1) wurden, unter Verwendung des Kommunikationskanals zu der Basiskomponente übertragen (3) werden.

10. Verfahren zur Verwaltung von Datenübertragungen nach einem der vorstehenden Ansprüche, wobei die Basiskomponente einen Prozessor-Datenspeicher für jede Erweiterungskomponente, die mit dem Kommunikationskanal verbunden ist, enthält.

11. Verfahren zur Verwaltung von Datenübertragungen nach Anspruch 10, wobei Daten durch den Kommunikationskanal in einen Prozessor-Datenspeicher direkt geschrieben (5) werden.

12. Verfahren zur Verwaltung von Datenübertragungen nach einem der Ansprüche 10 oder 11, wobei die Anordnung von Speicheradressen, die in einem Prozessor-Datenspeicher verfügbar sind, die gleiche ist wie die Anordnung von Speicheradressen, die in einem Erweiterungskomponenten-Datenspeicher verfügbar sind.

13. Verfahren zur Verwaltung von Datenübertragungen nach einem der Ansprüche 10 oder 11, wobei die Anordnung von Speicheradressen, die in einem Erweiterungskomponenten-Datenspeicher verfügbar sind, durch eine Verweisberechnung, die von der Basiskomponente unter Verwendung einer Prozessor-Datenspeicher-Adresse als eine Eingabe in die Berechnung durchgeführt wird, berechnet wird.

14. Verfahren zur Verwaltung von Datenübertragungen nach einem der vorstehenden Ansprüche, wobei die Anordnung der Speicheradressen eines Erweiterungskomponenten-Datenspeichers in der Form eines Umlaufpuffers ist.

15. Verfahren zur Verwaltung von Datenübertragungen nach Anspruch 14, wobei der Umlaufpuffer eine kontinuierliche Anordnung von Adressen bereitstellt.

16. Verfahren zur Verwaltung von Datenübertragungen nach einem der Ansprüche 10 bis 15, wobei eine Kopie derselben Daten von dem Prozessor-Datenspeicher und dem Erweiterungskomponenten-Datenspeicher gehalten wird.

17. Verfahren zur Verwaltung von Datenübertragungen nach einem der vorstehenden Ansprüche, wobei die Basiskomponente angepasst ist, um Verweise (8) auf Daten, die sie von einer Erweiterungskomponente empfängt (4), nach Verarbeitung (6) der Daten, auf die verwiesen wurde, zurück an die Erweiterungskomponente zu übertragen.

18. Datenübertragungs-Verwaltungssoftware, bestehend aus computerlauffähigen Anweisungen, die angepasst sind, um mit einer Erweiterungskomponente ausgeführt zu werden, wobei die Software angepasst ist, um die Schritte der Speicherung (2) von Daten, die von einer Erweiterungskomponente empfangen (1) wurden, in einem Erweiterungskomponenten-Datenspeicher, und Übertragen (3) der Daten, die von der Erweiterungskomponente empfangen wurden, an einen Prozessor (4), der in einer Basiskomponente integriert ist, unter Verwendung eines Kommunikationskanals auszuführen, **gekennzeichnet durch** Empfangen von Verweisen (9) auf die Daten, die in dem Erweiterungskomponenten-Datenspeicher gespeichert sind, von dem Prozessor unter Verwendung des Kommunikationskanals.

19. Datenübertragungs-Verwaltungssoftware nach Anspruch 18, wobei die Software weiter **dadurch gekennzeichnet ist, dass** sie angepasst ist, um den zusätzlichen anschließenden Schritt des Abrufens (10) der Daten, auf die verwiesen wurde, aus dem Erweiterungskomponenten-Datenspeicher auszuführen.

20. Erweiterungskomponente zur Verwendung in einem Datenübertragungs-Verwaltungssystem, wobei die Erweiterungskomponente angepasst ist, um empfangene Daten (1) in einem Datenspeicher zu speichern (2) und die empfangenen Daten an einen Prozessor (4), der in einer Basiskomponente integriert ist, unter Verwendung eines Kommunikationskanals zu übertragen (3), **dadurch gekennzeichnet, dass** die Erweiterungskomponente angepasst ist, um Verweise (9) auf die gespeicherten Daten von dem Prozessor unter Verwendung des Kommunikationskanals zu empfangen.

21. Erweiterungskomponente nach Anspruch 20, wobei die Erweiterungskomponente angepasst ist, um die Daten, auf die verwiesen wurde, aus dem Erweiterungskomponenten-Datenspeicher abzurufen (10).

22. Datenübertragungs-Verwaltungssoftware, bestehend aus computerlauffähigen Anweisungen, die angepasst sind, um mit einer Erweiterungskomponente ausgeführt zu werden, wobei die Software angepasst ist, um die Schritte des Empfangens von Daten, die durch eine Erweiterungskomponente empfangen (1) wurden, von der Erweiterungskomponente unter Verwendung eines Kommunikationskanals, wobei die Daten vorher in einem Erweiterungskomponenten-Datenspeicher gespeichert (2) wurden, der mit der Erweiterungskomponente assoziiert ist, die die Daten überträgt, und des Verarbeitens (6) der empfangenen Daten unter Verwendung eines Prozessors einer Basiskomponente auszuführen, **gekennzeichnet durch** Übertragen von Verweisen (8) auf die Daten, die in dem Datenspeicher der Erweiterungskomponente (9) gespeichert sind, von der Basiskomponente unter Verwendung des Kommunikationskanals an die Erweiterungskomponente.

23. Datenübertragungs-Verwaltungssystem, das mindestens eine Erweiterungskomponente umfasst, die angepasst ist, um Daten zu empfangen (1), wobei die mindestens eine Erweiterungskomponente an eine Basiskomponente angeschaltet ist, und mindestens einen Erweiterungsdatenspeicher, der angepasst ist, um Daten zu speichern (2), die von der mindestens einen Erweiterungskomponente empfangen (1) wurden, und mindestens einen Prozessor, der in einer Basiskomponente integriert ist, wobei der Prozessor oder die Prozessoren angepasst sind, um mindestens einen Teil der Daten, die von einer Erweiterungskomponente empfangen wurden, zu verarbeiten (6), und einen Kommunikationskanal, der angepasst ist, um Daten zwischen der Basiskomponente und einer Erweiterungskomponente zu übertragen, wobei die Basiskomponente angepasst ist, um Daten von einer Erweiterungskomponente unter Verwendung des Kommunikationskanals zu empfangen (4), **dadurch gekennzeichnet, dass** die Erweiterungskomponente angepasst ist, um Verweise auf Daten, die in dem Erweiterungskomponenten-Datenspeicher gespeichert sind, unter Verwendung des Kommunikationskanals von der Basiskomponente zu empfangen (9).

24. Datenübertragungs-Verwaltungssystem nach Anspruch 23, das einen Prozessor-Datenspeicher umfasst, der in der Basiskomponente integriert ist, wobei der Prozessor-Datenspeicher angepasst ist, um Daten zu speichern, die durch die Basiskomponente von einer Erweiterungskomponente unter Verwendung des Kommunikationskanals empfangen (4) wurden.

## Revendications

1. Procédé de gestion de transferts de données entre un composant de base et au moins un composant d'extension, comprenant les étapes consistant à stocker (2) des données reçues (1) par un composant d'extension dans un magasin de données de composant d'extension, transférer (3) les données reçues par un composant d'extension à un processeur (4) intégré dans un composant de base en utilisant un canal de communication, et traiter (6) les données transférées à l'aide du processeur, **caractérisé par** le transfert de références (8) aux données stockées dans le magasin de données de composant d'extension du composant de base au composant d'extension (9) à l'aide du canal de communication.

2. Procédé de gestion de transferts de données selon la revendication 1, dans lequel un composant d'extension est formé à partir d'une carte de fente d'extension.

3. Procédé de gestion de transferts de données selon la revendication 1 ou 2, dans lequel un composant de base comporte un ou plusieurs processeurs.

4. Procédé de gestion de transferts de données selon l'une quelconque des revendications précédentes, dans lequel un composant d'extension est apte à recevoir (1) des données en provenance d'un réseau de transmission numérique.

5. Procédé de gestion de transferts de données selon la revendication 4, dans lequel les données reçues (1) par le composant d'extension sont formatées sous la forme de paquets de données.

6. Procédé de gestion de transferts de données selon l'une quelconque des revendications 4 ou 5, dans lequel un magasin de données de composant d'extension est utilisé pour stocker (2) toutes les données reçues (1) du réseau de transmission numérique par la carte d'extension.

7. Procédé de gestion de transferts de données selon l'une quelconque des revendications précédentes, dans lequel un canal de communication est formé à partir d'un système de bus à accès multiples.

8. Procédé de gestion de transferts de données selon la revendication 7, dans lequel le canal de communication est formé par un bus PCI.

9. Procédé de gestion de transferts de données selon l'une quelconque des revendications précédentes, dans lequel toutes les données reçues (1) par un composant d'extension sont transférées (3) au composant de base au moyen du canal de communication.

10. Procédé de gestion de transferts de données selon l'une quelconque des revendications précédentes, dans lequel le composant de base comporte un magasin de données de processeur pour chaque composant d'extension connecté au canal de communication.

11. Procédé de gestion de transferts de données selon la revendication 10, dans lequel des données sont écrites directement (5) dans un magasin de données de processeur par le canal de communication.

12. Procédé de gestion de transferts de données selon l'une quelconque des revendications 10 ou 11, dans lequel l'agencement d'adresses de mémoire disponibles dans un magasin de données de processeur est le même que l'agencement d'adresses de mémoire disponibles dans un magasin de données de composant d'extension.

13. Procédé de gestion de transferts de données selon l'une quelconque des revendications 10 ou 11, dans lequel l'agencement d'adresses de mémoire disponibles dans un magasin de données de composant est émulé par un calcul de référence exécuté par le composant de base en utilisant une adresse de magasin de , données de processeur en tant qu'une entrée audit calcul.

14. Procédé de gestion de transferts de données selon l'une quelconque des revendications précédentes, dans lequel l'agencement d'adresses de mémoire d'un magasin de données de composant d'extension est sous la forme d'une mémoire tampon circulaire.

15. Procédé de gestion de transferts de données selon la revendication 14, dans lequel la mémoire tampon circulaire fournit un réseau ininterrompu d'adresses.

16. Procédé de gestion de transferts de données selon l'une quelconque des revendications 10 à 15, dans lequel une copie des mêmes données est conservée par le magasin de données de processeur et par le magasin de données de composant d'extension.

17. Procédé de gestion de transferts de données selon l'une quelconque des revendications précédentes, dans lequel le composant de base est apte à retransmettre des références (8) aux données qu'il reçoit (4) d'un composant d'extension vers le composant d'extension après avoir traité (6) les données de référence.

18. Logiciel de gestion de transfert de données comportant des instructions exécutables par ordinateur aptes à être exécutées avec un composant d'extension, ledit logiciel étant apte à exécuter les étapes consistant à stocker (2) des données reçues (1) par un composant d'extension dans un magasin de données de composant d'extension, et transférer (3) les données reçues par un composant d'extension à un processeur (4) intégré dans un composant de base en utilisant un canal de communication, **caractérisé par** la réception de références (9) aux données stockées dans le magasin de données de composant d'extension du processeur en utilisant le canal de communication.

19. Logiciel de gestion de transfert de données selon la revendication 18, ledit logiciel étant en outre **caractérisé en ce qu'**il est apte à exécuter l'étape ultérieure subséquente consistant à récupérer (10) les données de référence à partir du magasin de données de composant d'extension.

20. Composant d'extension à utiliser dans un système de gestion de transfert de données, ledit composant d'extension étant apte à stocker (2) des données reçues (1) dans un magasin de données, et transférer (3) les données reçues à un processeur (4) intégré dans un composant de base en utilisant un canal de communication, **caractérisé en ce que** le composant d'extension est apte à recevoir des références (9) aux données stockées du processeur en utilisant le canal de communication.

21. Composant d'extension selon la revendication 20, ledit composant d'extension étant apte à récupérer (10) les données de référence à partir du magasin de données de composant d'extension.

22. Logiciel de gestion de transfert de données consistant en des instructions exécutables par ordinateur aptes à être exécutées avec un composant de base, ledit logiciel étant apte à exécuter les étapes consistant à recevoir des données reçues (1) par un composant d'extension à partir du composant d'extension en utilisant un canal de communication, lesdites données étant auparavant stockées (2) dans un magasin de données de composant d'extension associé au composant d'extension transférant lesdites données, et à traiter (6) lesdites données reçues au moyen d'un processeur d'un composant de base, **caractérisé par** le transfert de références (8) aux données stockées dans le magasin de données de composant d'extension (9) du composant de base au composant d'extension en utilisant le canal de communication.

23. Système de gestion de transfert de données comportant au moins un composant d'extension apte à recevoir des données (1), ledit au moins un composant d'extension étant interfacé avec un composant de base, et au moins un magasin de données d'extension apte à stocker (2) des données reçues (1) par ledit au moins un composant d'extension, et au moins un processeur intégré dans un composant de base, ledit processeur ou lesdits processeurs étant aptes à traiter (6) au moins une partie des données reçues par un composant d'extension, et un canal de communication apte à transférer des données entre le composant de base et un composant d'extension, dans lequel le composant de base est apte à recevoir (4) des données d'un composant d'extension en utilisant le canal de communication, **caractérisé en ce que** le composant d'extension est apte à recevoir (9) du composant de base des références à des données stockées dans le magasin de données de composant d'extension en utilisant le canal de communication.

24. Système de gestion de transfert de données selon la revendication 23, lequel comporte un magasin de données de processeur intégré dans le composant de base, ledit magasin de données de processeur étant apte à stocker des données reçues (4) par le composant de base d'un composant d'extension en utilisant le canal de communication.
